# EUROPÄISCHE PATENTSCHRIFT

(11) **EP 3 499 324 B1**
(45) Veröffentlichungstag und Bekanntmachung des Hinweises auf die Patenterteilung: **27.01.2021**
(21) Anmeldenummer: 17206727.4
(22) Anmeldetag: 12.12.2017
(51) Int. Cl.: G05B 19/042

(54) **VERFAHREN ZUR MODULAREN VERIFIKATION EINER KONFIGURATION EINES GERÄTS**
METHOD OF MODULAR VERIFICATION OF A CONFIGURATION OF A DEVICE
PROCÉDÉ DE VÉRIFICATION MODULAIRE D'UNE CONFIGURATION D'UN APPAREIL

(43) Veröffentlichungstag der Anmeldung: 19.06.2019
(73) Patentinhaber: SICK AG, 79183 Waldkirch (DE)
(72) Erfinder: Fecher, Harald, 79111 Freiburg (DE); Moddemann, Jörg, 79132 Emmendingen (DE); Wehrle, Martin, 79111 Freiburg (DE)

(56) Entgegenhaltungen:
- EP-A1- 0 587 936
- WO-A2-2006/063919
- DE-A1-102009 019 089
- DE-A1-102009 044 555
- DE-A1-102010 061 733
- DE-A1-102013 112 488

## Beschreibung

Die Erfindung betrifft ein Verfahren zur modularen Verifikation einer Konfiguration eines Geräts, insbesondere einer Sicherheitssteuerung, gemäß dem Oberbegriff des Anspruchs 1.

In der heutigen Sicherheitstechnik muss beim Implementieren einer Konfiguration in ein Gerät sichergestellt werden, dass die vorgesehene Konfiguration korrekt implementiert wird, um beispielsweise Speicherfehler eines externen Eingabegeräts, wie ein Computer oder ein Smartphone, auf dem die Konfiguration erstellt wurde, und/oder Übertragungsfehler der Konfiguration erkennen zu können. Der Überprüfungsprozess wird als Verifikation bezeichnet.

Ein gängiges Verifikationsverfahren besteht darin, die implementierten Parameter auf das Eingabegerät zurück zu visualisieren und die Korrektheit der Parameter von einem autorisierten Nutzer explizit bestätigen zu lassen. Hierbei erfordert das bisherige Verifikationsverfahren ein Wissen des gesamten Systems vom Nutzer, das heißt die Kenntnis bzgl. aller eingestellten Parameter, um die Verifikation der gesamten Konfiguration des Geräts durchführen zu können. Solch eine Verifikation ist daher komplex und schwierig und birgt Fehlerquellen, die die Verifikation fehleranfällig macht.

Mit anderen Worten, nach der Erstellung und Implementierung bzw. Übertragung der Konfiguration auf das Gerät findet die Verifikation über die gesamte Konfiguration des Geräts durch ausgewählte Personen statt, die das komplette Verständnis der gesamten Konfiguration des Geräts haben müssen.

DE 10 2010 061733 A1 offenbart ein Prüfverfahren gemäß dem Oberbegriff des Anspruchs 1, wobei das Prüfverfahren eine Integrität eines Quelltextes prüft. Hierbei berechnet das Prüfverfahren eine prädizierte Prüfsumme basierend auf einem Quelltext und basierend auf einem einzufügenden Code-Segment und eine berechnete Prüfsumme aus dem Quelltext mit dem eingefügten Code-Segment. Die prädizierte und berechnete Prüfsumme werden verglichen, um eine Richtigkeit der Einfügung des Code-Segments zu dem Quelltext zu prüfen.

Es ist daher eine Aufgabe der Erfindung, ein Verfahren zur modularen Verifikation einer Konfiguration eines Geräts der eingangs genannten Art zur Verfügung zu stellen, mit dem eine einfache und sichere Verifikation des Geräts gewährleistet ist.

Die Aufgabe wird erfindungsgemäß durch ein Verfahren zur modularen Verifikation einer Konfiguration eines Geräts mit den Merkmalen des Anspruchs 1 gelöst.

Hieraus ergibt sich der Vorteil, dass die Teilkonfigurationen von unterschiedlichen Nutzern verifiziert werden können, wobei die Nutzer lediglich das Wissen bzw. das Verständnis über die jeweilige von ihnen zu verifizierende Teilkonfiguration und nicht das gesamte Verständnis über die Konfiguration des gesamten Geräts besitzen müssen.

Gemäß einem bevorzugten Ausführungsbeispiel, werden eine Eingangs- und/oder Ausgangseinheit, eine Steuerung, ein Interface und andere Einheiten des Geräts als Teilkonfigurationen unterteilt. Dies ermöglicht eine Reduzierung des Wissens zum Verifizieren der Konfiguration des Geräts in lediglich Teilwissen über die Teilkonfigurationen des Geräts, wobei eine sichere Verifikation der Gesamtkonfiguration des Geräts trotzdem gewährleistet bleibt.

Bei der Verifikation der nachkommenden Teilkonfiguration wird die Einzel-Prüfsumme der vorhergehenden Teilkonfiguration nachgerechnet und mit der bei der Verifikation der vorhergehenden Teilkonfiguration berechneten Einzel-Prüfsumme verglichen, so dass bei einer Übereinstimmung der Einzel-Prüfsummen die Verifikation der vorhergehenden Teilkonfiguration lediglich bestätigt wird. Mit anderen Worten, ein Nutzer benötigt beispielsweise lediglich das Verständnis über die durch ihn zu verifizierende Teilkonfiguration, um diese Teilkonfiguration zu verifizieren und die Verifikation der vorhergehenden Teilkonfiguration zu bestätigen, wenn die vorhergehende Teilkonfiguration von einem anderen Nutzer bereits verifiziert wurde und die nachberechnete Einzel-Prüfsumme der vorhergehenden Teilkonfiguration weiterhin korrekt ist.

Durch die Verzweigung kann beispielweise ein technischer Zusammenhang der Teilkonfigurationen intuitiver und eindeutiger wiedergegeben werden. Insbesondere gibt der Verifikationsstatus an, ob die Teilkonfiguration verifiziert oder nicht verifiziert ist. Hieraus ergibt sich ein erhöhter Sicherheitslevel für die Verifikation, da die Verifikation einer Teilkonfiguration nicht bestätigt werden kann, wenn der Verifikationsstatus der vorhergehenden Teilkonfiguration nicht verifiziert ist oder sich verändert.

Gemäß einem weiteren bevorzugten Ausführungsbeispiel wird der Verifikationsstatus der nachgehenden Teilkonfiguration von verifiziert zu nicht verifiziert geändert, wenn sich der Verifikationsstatus der vorhergehenden Teilkonfiguration von verifiziert zu nicht verifiziert ändert. Insbesondere ändert sich der Verifikationsstatus der Teilkonfiguration, wenn die Parameter der Teilkonfiguration geändert werden. Dadurch ist sichergestellt, dass die Verifikation entlang der Teilkonfigurationsfolge nicht fälschlicherweise bestätigt wird, wenn der Verifikationsstatus einer der Teilkonfiguration der Teilkonfigurationsfolge noch nicht verifiziert ist oder sich verändert hat.

Vorzugsweise werden die Parameter in erste sicherheitsrelevante Parameter und zweite nicht-sicherheitsrelevante Parameter unterschieden, wobei die Einzel-Prüfsumme aus den ersten Parametern der Teilkonfiguration berechnet wird. Insbesondere werden bei der Verifikation der nachkommenden Teilkonfiguration die zweiten Parameter neben der Einzel-Prüfsumme der vorhergehenden Teilkonfiguration mit angegeben. Hierbei umfasst ganz im Besonderen die zweiten Parameter eine Beschreibung, vorzugsweise in einem Klartext, die eine Semantik, eine Funktion und/oder den Verifikationsstatus der Teilkonfiguration wiedergibt. Hierdurch ergibt sich der Vorteil, dass der Nutzer, der die nachkommende Teilkonfiguration zu verifizieren hat, über die zweiten Parameter Kenntnisse bzw. Informationen über die vorhergehende Teilkonfiguration mitgeteilt bekommt, so dass er eine Funktionsweise der vorhergehenden Teilkonfiguration leichter nachvollziehen kann.

Erfindungsgemäß wird die Einzel-Prüfsumme durch ein externes Eingabegerät ausgerechnet und dem Nutzer zur Plausibilitätsprüfung angezeigt. Hierbei wird vorzugsweise zum Berechnen der Einzel-Prüfsumme die sicherheitsrelevanten Parameter der Teilkonfiguration genommen, wobei bei der Berechnung der Einzel-Prüfsumme der nachkommenden Teilkonfiguration die sicherheitsrelevanten Parameter der vorhergehenden Teilkonfiguration mit in die Berechnung einfließt, so dass die sicherheitsrelevanten Parameter der vorhergehenden Teilkonfiguration in der Einzel-Prüfsumme der nachkommenden Teilkonfiguration mitberücksichtigt sind. Vorteilhafterweise brauchen die Parameter der vorhergehenden Teilkonfiguration nicht von dem Nutzer verifiziert werden, da sie durch die Verifikation der Einzel-Prüfsumme der vorhergehenden Teilkonfiguration bereits verifiziert sind.

Gemäß einem weiteren bevorzugten Ausführungsbeispiel wird die Verifikation einer Teilkonfiguration oder einer Teilkonfigurationsfolge mit einer Zugangsverschlüsselung, vorzugsweise Passwort oder Pin, geschützt. Hierdurch kann der Nutzer, der eine Teilkonfiguration bzw. eine Teilkonfigurationsfolge verifizieren soll, nicht ohne die Zugangsverschlüsselung auf Details der vorhergehenden Teilkonfiguration bzw. Teilkonfigurationsfolge zugreifen, da diese vor ihm geschützt verschlüsselt ist und ihm lediglich die Einzel-Prüfsumme der vorhergehenden Teilkonfiguration bzw. Teilkonfigurationsfolge zum Nachrechnen und zum Bestätigen angezeigt wird. Insbesondere wird die Verifikation der Teilkonfiguration einem vorgegebenen Authentifizierungslevel zugewiesen, so dass nur authentifizierte Nutzer, wie beispielsweise ein autorisierter Kunde oder ein Support-Mitarbeiter, bei der zugewiesenen Teilkonfiguration Zugriff erhält und die Verifikation durchführt.

Gemäß einem weiteren bevorzugten Ausführungsbeispiel ist die letzte Teilkonfiguration von allen Teilkonfigurationsfolgen gleich. Das heißt, alle Teilkonfigurationsfolgen haben eine gemeinsame letzte Teilkonfiguration, so dass mit der Berechnung der Einzel-Prüfsumme der letzten Teilkonfiguration die Teilkonfigurationsfolgen verifiziert sind. Andererseits ist vorzugsweise die letzte Teilkonfiguration von zumindest zwei Teilkonfigurationsfolgen verschieden. Mit anderen Worten, wenn zumindest zwei Teilkonfigurationsfolgen unterteilt sind und die Teilkonfigurationsfolgen technisch unabhängig voneinander sind, so weist jede Teilkonfigurationsfolge eine letzte Teilkonfiguration auf, wobei die letzten Teilkonfigurationen ebenfalls voneinander unabhängig sind. Mit der Berechnung der jeweiligen Einzel-Prüfsumme der letzten Teilkonfigurationen sind die Teilkonfigurationsfolgen verifiziert.

Bevorzugte Ausgestaltungen und Weiterbildungen sowie weitere Vorteile der Erfindung sind den Unteransprüchen, der nachfolgenden Beschreibung und den Zeichnungen zu entnehmen.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer Sicherheitssteuerung, und
- Fig. 2: eine schematische Darstellung eines erfindungsgemäßen Verfahrens.

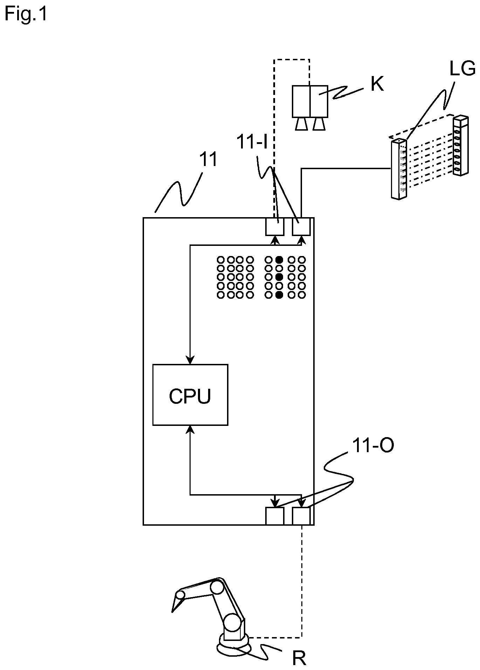

Die Figur 1 zeigt eine schematische Darstellung einer beispielhaften Sicherheitssteuerung 11, die als Gerät zu konfigurieren ist, so dass eine Konfiguration der Sicherheitssteuerung 11 bzw. des Geräts verifiziert wird. Anhand der beispielhaften Sicherheitssteuerung 11 ist ein erfindungsgemäßes Verfahren zur modularen Verifikation der Konfiguration des Geräts bzw. der Sicherheitssteuerung 11 im Folgenden beschrieben. Hierbei wird die Konfiguration des Geräts bzw. der Sicherheitssteuerung 11 auf einem externen Eingabegerät, wie vorzugsweise einem Computer oder einem Smartphone, erstellt und dann auf das Gerät bzw. die Sicherheitssteuerung 11 implementiert bzw. übertragen. Die Implementierung der Konfiguration wird auf dem externen Eingabegerät angezeigt, damit ein Nutzer die Konfiguration bestätigen und damit einen möglichen Speicherfehler des externen Eingabegeräts und/oder einen Übertragungsfehler ausschließen kann.

Die Sicherheitssteuerung 11 ist vorgesehen, um Eingangssignale von an die Sicherheitssteuerung 11 angeschlossenen Signalgebern zu empfangen. Die Signalgeber sind in dem gezeigten Ausführungsbeispiel eine Kamera K und ein Lichtgitter LG, die jeweils an Eingangsanschlüsse 11-l der Sicherheitssteuerung 11 angeschlossen sind. Die empfangenen Eingangssignale der Kamera K und des Lichtgitters LG werden von den Eingangsanschlüssen 11-l an eine Steuereinheit CPU der Sicherheitssteuerung 11 kommuniziert, wobei die Steuereinheit CPU aus zumindest einem Prozessor mit entsprechender Logik bestehen kann.

Die Steuereinheit 11 wertet die Eingangssignale aus und generiert entsprechende ausgehende Ausgangssignale, die von der Steuereinheit 11 an Ausgangsanschlüsse 11-O der Sicherheitssteuerung 11 kommuniziert werden. Die Ausgangssignale dienen dazu, einen an zumindest einem der Ausgangsanschlüsse 11-O angeschlossenen Aktuator sicher zu steuern. Hierbei stellt in dem dargestellten Ausführungsbeispiel ein Industrieroboter R den Aktuator dar.

Entsprechend einer Applikation des Industrieroboters R und der den Industrieroboter R bzw. dessen Umgebung überwachenden Kamera K sowie des Lichtgitters LG müssen die Sicherheitssteuerung 11 konfiguriert und die Konfiguration verifiziert werden.

Das erfindungsgemäße Verfahren unterteilt die Konfiguration in mindestens zwei Teilkonfigurationen, die verifiziert werden.

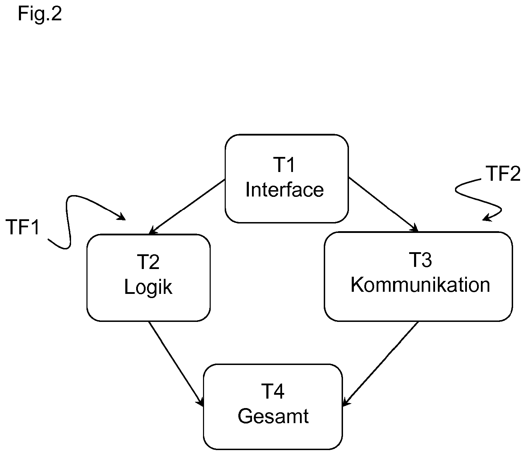

Das heißt, wie bei einem in der Figur 2 dargestellten Ausführungsbeispiel, unterteilt das Verfahren beispielsweise die Konfiguration der Sicherheitssteuerung 11 in vier Teilkonfigurationen T1, T2, T3 und T4. Insbesondere werden eine Eingangs- und/oder Ausgangseinheit, eine Steuerung, ein Interface und andere Einheiten des Geräts bzw. der Sicherheitssteuerung 11 als Teilkonfigurationen unterteilt. Die Teilkonfigurationen werden bei dem Ausführungsbeispiel im Folgenden mit T1 für das "Interface", mit T2 für die "Logik", mit T3 für die "Kommunikation" und mit T4 für "Gesamt" bezeichnet.

Die Teilkonfigurationen T1 bis T4 werden erfindungsgemäß zu zumindest einer Teilkonfigurationsfolge TF1 und TF2 zugeteilt, bei der eine Abhängigkeit einer Verifikation der Teilkonfigurationen voneinander vorgegeben wird.

Gemäß dem dargestellten Ausführungsbeispiel sind bei einer ersten Teilkonfigurationsfolge TF1 die Teilkonfigurationen T1, T2 und T4 einander zugeteilt. Bei einer zweiten Teilkonfigurationsfolge TF2 sind die Teilkonfigurationen T1, T3 und T4 einander zugeteilt. Hierbei stellen die Pfeilrichtungen der Verbindungen zwischen den Teilkonfigurationen T1 bis T4 nicht eine Richtung eines Datenaustausches zwischen den physikalischen Komponenten dar. Die Pfeilrichtungen symbolisieren eine Reihenfolge der Verifikation der Teilkonfigurationsfolgen TF1 und TF2, da die Verifikation der ersten Teilkonfigurationsfolge TF1 und der zweiten Teilkonfigurationsfolge TF2 von den jeweiligen zugeteilten Teilkonfigurationen T1, T2, und T4 bzw. T1, T3 und T4 abhängig ist.

Mit anderen Worten, die Teilkonfiguration T2 der Teilkonfigurationsfolge TF1 kann beispielsweise nicht verifiziert werden, wenn die vorhergehende Teilkonfiguration T1 nicht bereits verifiziert ist. Das heißt, die nachfolgende Teilkonfiguration T4 kann nicht verifiziert werden, wenn die erste und zweite Teilkonfigurationsfolge TF1 und TF2 nicht bereits vollständig verifiziert sind.

Das erfindungsgemäße Verfahren bestimmt Parameter jeder Teilkonfiguration T1 bis T4, wobei die Parameter zum Verifizieren der jeweiligen Teilkonfigurationen T1, T2, T3 und T4 genutzt werden.

Hierbei können beispielsweise die Parameter der Teilkonfiguration T3 aus einer Anzahl, einer Belegung bzw. einer Adressierung oder einer Datenübertragungsrate der Eingangs- und Ausgangsanschlüsse 11-l und 11-O bestehen. Die Parameter der Teilkonfiguration T1 können beispielweise durch eine Menge von ein- und ausgehenden Datentypen bestehen, wobei die Parameter vorzugsweise von dem Verfahren oder von dem Nutzer definiert werden.

Für jede Teilkonfiguration T1, T2, T3 und T4 wird eine Einzel-Prüfsumme berechnet, die die Verifikation der Teilkonfiguration T1, T2, T3 und T4 wiedergibt.

Das heißt, entsprechend der Figur 2 erhält die Teilkonfiguration T1 ("Interface") aus ihren Parametern eine individuelle Einzel-Prüfsumme berechnet, mit der die Teilkonfiguration T1 als verifiziert gekennzeichnet wird. Die Teilkonfiguration T2 ("Logik") bzw. T3 ("Kommunikation") erhält aus ihren Parametern und insbesondere sicherheitsrelevanten Parametern einer vorhergehenden Teilkonfiguration T1 eine individuelle Einzel-Prüfsumme berechnet, so dass die Parameter der vorhergehenden Teilkonfiguration T1 in der Einzel-Prüfsumme der nachkommenden Teilkonfigurationen T2 bzw. T3 mitberücksichtigt sind. Die Teilkonfiguration T4 ("Gesamt") erhält aus ihren Parametern und insbesondere sicherheitsrelevanten Parametern der vorhergehenden Teilkonfigurationen T1, T2 und T3 eine individuelle Einzel-Prüfsumme berechnet, so dass die Parameter der vorhergehenden Teilkonfigurationen T1, T2 und T3 in der Einzel-Prüfsumme der Teilkonfiguration T4 Berücksichtigung finden. Somit stellt die jeweilige Einzel-Prüfsumme einen Wert aus den jeweiligen Parametern der Teilkonfiguration T1, T2, T3 oder T4 und den Parametern der jeweiligen vorhergehenden Teilkonfiguration T1, T2, T3 dar, mit dem eine Integrität der Parameter überprüft werden kann.

Bei der Verifikation einer in der Teilkonfigurationsfolge TF1 oder TF2 nachfolgenden Teilkonfiguration T2 und T4 bzw. T3 und T4 wird die Einzel-Prüfsumme der vorhergehenden Teilkonfiguration T2 und T1 bzw. T3 und T1 nachgerechnet und die Verifikation der vorhergehenden Teilkonfiguration wird bei einer Übereinstimmung der Einzel-Prüfsumme der jeweiligen vorhergehenden Teilkonfiguration bestätigt. Das Nachrechnen der Einzel-Prüfsumme wird vorzugsweise mittels des externen Eingabegeräts durchgeführt.

Mit anderen Worten und bezogen auf die Figur 2, bei der Verifikation der nachfolgenden Teilkonfiguration T2 bzw. T3 werden jeweils die Einzel-Prüfsummen der vorhergehenden Teilkonfiguration T1 nachgerechnet. Bei einer Übereinstimmung zwischen der individuellen Einzel-Prüfsumme der Teilkonfiguration T1 mit der nachberechneten Einzel-Prüfsumme für die Teilkonfiguration T1 können die nachfolgenden Teilkonfigurationen T2 und T3 die Verifikation der Konfiguration der vorhergehenden Teilkonfiguration T1 bestätigen und ihre eigene Konfiguration durch die Berechnung ihrer eigenen Einzel-Prüfsumme aus ihren eigenen Parametern und den, insbesondere sicherheitsrelevanten, Parametern der vorhergehenden Teilkonfiguration T1 verifizieren. Bei der Verifikation der nachfolgenden Teilkonfiguration T4 werden die jeweiligen Einzel-Prüfsummen der vorhergehenden Teilkonfigurationen T2 und T3 nachgerechnet und die Verifikation der Teilkonfigurationen T2 und T3 wird bei einer Übereinstimmung der bei der Verifikation berechneten Einzel-Prüfsummen und der nachgerechneten Einzel-Prüfsummen der Teilkonfigurationen T2 und T3 bestätigt.

Somit benötigt der Nutzer, der beispielsweise die Teilkonfiguration T1 ("Interface") zu verifizieren hat, lediglich das technische Verständnis bzgl. der Konfiguration der Teilkonfiguration T1 bzw. das Wissen über die Parameter der Teilkonfiguration T1.

Der Nutzer, der beispielsweise die Teilkonfiguration T2 ("Logik") zu verifizieren hat, benötigt lediglich das technische Verständnis bzgl. der Konfiguration der Teilkonfiguration T2 bzw. das Wissen über die Parameter der Teilkonfiguration T2 und die Einzel-Prüfsumme der vorhergehenden Teilkonfiguration T1, um mit der nachberechneten Einzel-Prüfsumme der vorhergehenden Teilkonfiguration T1 die Verifikation insbesondere der Parameter der Teilkonfiguration T1 zu bestätigen und die Verifikation der Teilkonfiguration T2 abzuschließen. Hierbei braucht der Nutzer keine Kenntnisse über die Parameter der Teilkonfiguration T1.

Der Nutzer, der beispielsweise die Teilkonfiguration T3 ("Kommunikation") zu verifizieren hat, benötigt lediglich das technische Verständnis bzgl. der Konfiguration der Teilkonfiguration T3 bzw. das Wissen über die Parameter der Teilkonfiguration T3 und die Einzel-Prüfsumme der vorhergehenden Teilkonfiguration T1, um mit der nachberechneten Einzel-Prüfsumme der vorhergehenden Teilkonfiguration T1 die Verifikation insbesondere der Parameter der Teilkonfiguration T1 zu bestätigen und die Verifikation der Teilkonfiguration T3 abzuschließen. Auch hier benötigt der Nutzer keine Kenntnisse über die Parameter der Teilkonfiguration T1.

Schließlich ist die Konfiguration des Geräts bzw. der Sicherheitssteuerung 11 verifiziert, wenn für jede Teilkonfigurationsfolge TF1 und TF2 die letzte Teilkonfiguration T4 ("Gesamt") verifiziert ist.

Das heißt, die Konfiguration der letzten Teilkonfiguration T4 ("Gesamt"), wie in der Figur 2 dargestellt, ist verifiziert, wenn die nachberechnete Einzel-Prüfsumme der Teilkonfigurationen T2 ("Logik") und T3 ("Kommunikation") mit ihrer jeweiligen, bei ihrer Verifikation berechneten Einzel-Prüfsumme übereinstimmt und die Einzel-Prüfsumme der Teilkonfiguration T4 korrekt ist. Dann ist die Verifikation der jeweiligen Teilkonfigurationsfolgen TF1 und TF2 bestätigt und die Konfiguration des gesamten Geräts bzw. der gesamten Sicherheitssteuerung 11 verifiziert. Hierbei benötigt bei der Verifikation der Teilkonfiguration T4 der Nutzer lediglich das Wissen über die spezifischen Parameter der Teilkonfiguration T4, wobei bei der Berechnung der Einzel-Prüfsumme der Teilkonfiguration T4 die sicherheitsrelevanten Parameter der vorhergehenden Teilkonfigurationen T1, T2 und T3 mitberücksichtigt werden. Die Parameter der Teilkonfiguration T4 könnten beispielsweise darin bestehen, dass die Teilkonfiguration T4 zwei Teilkonfigurationen T2 und T3 aufweist.

Insbesondere können die Parameter der Teilkonfiguration T1 dem für die Verifikation der letzten Teilkonfiguration T4 zuständigen Nutzer nicht mitgeteilt werden, weil bei der Verifikation der Teilkonfigurationen T2 und T3 diese Parameter bereits mitberücksichtigt bzw. bestätigt wurden. Somit reduziert sich automatisch eine Anzahl von Parametern, die der für eine in der Teilkonfigurationsfolge TF1 bzw. TF2 später folgenden Teilkonfiguration zuständige Nutzer verifizieren muss.

Dadurch benötigt der Nutzer, der letztendlich die Konfiguration des gesamten Geräts bzw. der gesamten Sicherheitssteuerung 11 verifiziert, lediglich das Verständnis bzgl. der von ihm zu verifizierenden Teilkonfiguration T4 bzw. die Kenntnis der jeweiligen Parameter. Er benötigt nicht das Verständnis über die gesamte Konfiguration bzw. das Wissen bzgl. aller Parameter der Konfiguration der gesamten Sicherheitssteuerung 11, um das Gerät bzw. die Sicherheitssteuerung 11 zu verifizieren, da insbesondere die nachkommende Teilkonfiguration jede unmittelbar vorhergehende Teilkonfiguration verifiziert und der Nutzer die Verifikation der vorhergehenden Teilkonfiguration lediglich anhand der nachgerechneten Einzel-Prüfsumme und nicht anhand der konkreten Parameter der vorhergehenden Teilkonfiguration bestätigt.

Vorteilhafterweise wird jede Teilkonfiguration T1 bis T4 einem Verifikationsstatus zugeordnet, wobei der Verifikationsstatus jeder Teilkonfiguration T2 bis T4 von dem Verifikationsstatus der vorhergehenden Teilkonfiguration T1 bis T3 abhängt. Hierbei gibt der Verifikationsstatus an, ob die Teilkonfiguration T1 bis T4 verifiziert oder nicht verifiziert ist.

Das heißt mit anderen Worten, gemäß der Figur 2 ist der Verifikationsstatus der Teilkonfiguration T4 ("Gesamt") von dem Verifikationsstatus der Teilkonfigurationen T2 ("Logik") und T3 ("Kommunikation") unmittelbar abhängig. Der Verifikationsstatus der Teilkonfigurationen T2 ist von dem Verifikationsstatus der Teilkonfiguration T3 nicht abhängig und vice versa. Hierdurch ist es möglich, dass einzelne Teilkonfigurationen T1, T2, T3 und T4 bzw. Teilkonfigurationsfolgen TF1 und TF2 durch unterschiedliche Nutzer modular voneinander erstellt und verifiziert werden, ohne dass ein Nutzer ein vollständiges Wissen bzgl. aller Parametern und Teilkonfigurationen T1 bis T4 haben muss.

Dies bedeutet wiederum, dass falls die Teilkonfigurationen T2 und T3 funktionstechnisch völlig unabhängig voneinander sein sollten, die Teilkonfiguration T4 entfallen könnte, da mit der Verifikation der Teilkonfigurationsfolgen TF1 und TF2 und damit der Teilkonfigurationen T2 und T3 die Verifikation der Konfiguration des Geräts bzw. der Sicherheitssteuerung 11 abgeschlossen sein kann und kein weiterer Verifikationsschritt notwendig wäre.

Weiterhin bedeutet das, dass die Teilkonfiguration T4 nur verifizierbar ist, wenn der Verifikationsstatus der Teilkonfigurationen T2 und T3 auf einen Verifikationsstatus "verifiziert" ist. Im Falle, dass beispielsweise der Verifikationsstatus der Teilkonfiguration T3 von "verifiziert" auf "nicht verifiziert" wechselt, weil die Parameter der Teilkonfiguration T3 geändert wurden, dann kann der für die Verifikation der Teilkonfiguration T4 zuständige Nutzer trotzdem die Verifikation der Konfiguration der Teilkonfiguration T2 und damit auch indirekt der Teilkonfiguration T1 bestätigen, wenn die nachberechnete Einzel-Prüfsumme der Teilkonfiguration T2 stimmt. Er muss lediglich für die Verifikation der Teilkonfiguration T4 die Teilkonfiguration T3 durch Neuberechnen der Einzel-Prüfsumme der Teilkonfiguration T3 mittels der neuen Parameter der Teilkonfiguration T3 separat verifizieren. In diesem Fall, kann der Nutzer auch die Teilkonfigurationen T3 und T4 gemeinsam durch Berechnen einer Einzel-Prüfsumme aus den Parametern der Teilkonfigurationen T3 und T4 verifizieren. Dieser Fall setzt jedoch voraus, dass der Nutzer das Wissen über beide Teilkonfigurationen T3 und T4 verfügt, um die gemeinsame Verifikation durchzuführen.

Hierdurch kann die Verifikation einer Teilkonfiguration oder einer Teilkonfigurationsfolge mit einer Zugangsverschlüsselung, vorzugsweise Passwort oder Pin, geschützt werden. Das heißt, wenn beispielweise die Teilkonfiguration T2 besonders wichtig ist und dementsprechend vom Nutzer verifiziert und durch eine Zugangsverschlüsselung geschützt wurde, dann kann der für die Verifikation der nachfolgenden Teilkonfiguration T4 zuständige Nutzer durch Bestätigen der Einzel-Prüfsumme der Teilkonfiguration T2 die Verifikation der Teilkonfiguration T4 durchführen und damit die Konfiguration des gesamten Geräts bzw. der gesamten Sicherheitssteuerung 11 verifizieren. Er ist jedoch nicht in der Lage, ohne die Zugangsverschlüsselung auf Details der vorhergehenden Teilkonfiguration T2 oder Teilkonfigurationsfolge TF1, insbesondere auf die entsprechenden Parameter, zuzugreifen.

Dadurch können Teilkonfigurationen T1, T2 oder T3, insbesondere deren Parameter, geheim gehalten werden, da lediglich die Einzel-Prüfsumme dem Nutzer der nachfolgenden Teilkonfiguration angezeigt werden und nicht die Parameter und damit die Konfiguration der vorhergehenden Teilkonfiguration an sich. Vorteilhafterweise wird die Verifikation der Teilkonfiguration T1 bis T4 einem vorgegebenen Authentifizierungslevel zugewiesen, so dass nur authentifizierte Nutzer, wie beispielsweise ein autorisierter und geschulter Kunde oder ein Support-Mitarbeiter, bei der zugewiesenen Teilkonfiguration T1 bis T4 Zugriff erhält und die Verifikation durchführt. Hierdurch wird sichergestellt, dass eine sichere Verifikation durch einen befähigten Nutzer gewährleistet ist.

Weiterhin werden vorzugsweise die Parameter in erste sicherheitsrelevante Parameter und zweite nicht-sicherheitsrelevante Parameter unterschieden, wobei die Einzel-Prüfsumme aus den ersten Parametern der Teilkonfiguration T1 bis T4 berechnet wird. Das heißt, dass bei der Verifikation der Teilkonfiguration T1 bis T4 die sicherheitsrelevanten Parameter durch die Berechnung der Einzel-Prüfsumme der Teilkonfiguration T1 bis T4 berücksichtigt werden. Die nicht-sicherheitsrelevanten Parameter können durch Berechnung einer separaten Einzel-Prüfsumme Berücksichtigung finden oder dem Nutzer angezeigt werden, damit der Nutzer die Funktionsweise der Teilkonfiguration T1 bis T4 besser einschätzen kann. Dies ist insbesondere nützlich, wenn beispielsweise die vorhergehende Teilkonfiguration zugangsverschlüsselt und somit für den verifizierenden Nutzer nicht einsehbar ist.

### Bezugszeichenliste

- 11: Sicherheitssteuerung
- 11-I: Eingangsanschlüsse
- 11-O: Ausgangsanschlüsse

- CPU: Steuereinheit
- K: Kamera
- LG: Lichtgitter
- R: Industrieroboter
- T1: Teilkonfiguration "Interface"
- T2: Teilkonfiguration "Logik"
- T3: Teilkonfiguration "Kommunikation"
- T4: Teilkonfiguration "Gesamt"
- TF1, TF2: Konfigurationsfolge

## Patentansprüche

1. Verfahren zum Verifizieren einer Konfiguration eines Geräts, insbesondere einer Sicherheitssteuerung (11), umfassend die Schritte:
Unterteilen der Konfiguration des Geräts in mindestens zwei Teilkonfigurationen (T1, T2, T3, T4), die verifiziert werden,
Bestimmen von Parametern jeder Teilkonfiguration (T1 -T4), wobei die Parameter zum Verifizieren der jeweiligen Teilkonfiguration (T1, T2, T3, T4) genutzt werden,
Berechnen für jede Teilkonfiguration (T1, T2, T3, T4) eine Einzel-Prüfsumme, die durch ein externes Eingabegerät ausgerechnet und einem Nutzer zur Plausibilitätsprüfung angezeigt wird und die Verifikation der Teilkonfiguration (T1, T2, T3, T4) wiedergibt, und
Zuteilen der Teilkonfigurationen (T1, T2, T3, T4) zu zumindest einer Teilkonfigurationsfolge (TF1, TF2), bei der eine Abhängigkeit der Verifikationen der einzelnen Teilkonfigurationen (T1, T2, T4; T1, T3, T4) voneinander vorgegeben wird, wobei die Abhängigkeit darin besteht, dass eine individuelle Einzel-Prüfsumme einer in der Teilkonfigurationsfolge (TF1, TF2) eine oder mehrere vorhergehenden Teilkonfigurationen (T1, T2, T3) nachfolgenden Teilkonfiguration (T2, T3, T4) aus ihren Parametern und den Parametern der vorhergehenden Teilkonfigurationen (T1, T2, T3) berechnet wird, so dass die Parameter der vorhergehenden Teilkonfigurationen (T1, T2, T3) in der Einzel-Prüfsumme der nachfolgenden Teilkonfiguration (T2, T3, T4) mitberücksichtigt sind, und
bei der Verifikation der nachfolgenden Teilkonfiguration (T2, T3, T4) die Einzel-Prüfsumme der vorhergehenden Teilkonfiguration (T1, T2, T3) nachgerechnet wird und bei einer Übereinstimmung der Einzel-Prüfsummen der vorhergehenden Teilkonfiguration (T1, T2, T3) die Verifikation der vorhergehenden Teilkonfiguration (T1, T2, T3) bestätigt wird, und
die Konfiguration des Geräts verifiziert ist, wenn für jede Teilkonfigurationsfolge (TF1, TF2) die letzte Teilkonfiguration (T4) verifiziert ist, und
wobei die Teilkonfigurationsfolge (TF1, TF2) in unterschiedliche Zweige verzweigt wird, so dass die Teilkonfigurationen (T1 - T4) unterschiedlich voneinander abhängig sind.

2. Verfahren nach Anspruch 1, **dadurch gekennzeichnet, dass** eine Eingangs- und/oder Ausgangseinheit (11-l, 11-O), eine Steuerung (CPU), ein Interface und andere Einheiten des Geräts als Teilkonfigurationen (T1 - T4) unterteilt werden.

3. Verfahren nach Anspruch 1 oder 2, **dadurch gekennzeichnet, dass** jede Teilkonfiguration (T1 - T4) einem Verifikationsstatus zugeordnet wird, und wobei der Verifikationsstatus jeder Teilkonfiguration (T1, T2, T3, T4) von dem Verifikationsstatus der vorhergehenden Teilkonfiguration (T1, T2, T3) abhängt.

4. Verfahren nach Anspruch 3, **dadurch gekennzeichnet, dass** der Verifikationsstatus angibt, ob die Teilkonfiguration (T1 - T4) verifiziert oder nicht verifiziert ist.

5. Verfahren nach Anspruch 3 oder 4, **dadurch gekennzeichnet, dass** der Verifikationsstatus der nachgehenden Teilkonfiguration (T2, T3, T4) von verifiziert zu nicht verifiziert geändert wird, wenn sich der Verifikationsstatus der vorhergehenden Teilkonfiguration (T1, T2, T3) von verifiziert zu nicht verifiziert ändert.

6. Verfahren nach zumindest einem der vorhergehenden Ansprüche 3 bis 5, **dadurch gekennzeichnet, dass** sich der Verifikationsstatus der Teilkonfiguration (T1 - T4) ändert, wenn die Parameter der Teilkonfiguration (T1 - T4) geändert werden.

7. Verfahren nach einem der vorhergehenden Ansprüche 1 bis 6, **dadurch gekennzeichnet, dass** die Parameter in erste sicherheitsrelevante Parameter und zweite nicht-sicherheitsrelevante Parameter unterschieden werden, und wobei die Einzel-Prüfsumme aus den ersten Parametern der Teilkonfiguration (T1, T2, T3, T4) berechnet wird.

8. Verfahren nach Anspruch 7, **dadurch gekennzeichnet, dass** bei der Verifikation der nachfolgenden Teilkonfiguration (T2, T3, T4) die zweiten Parameter neben der Einzel-Prüfsumme der vorhergehenden Teilkonfiguration (T1, T2, T3) mit angegeben werden.

9. Verfahren nach Anspruch 7 oder 8, **dadurch gekennzeichnet, dass** die zweiten Parameter eine Beschreibung, vorzugsweise in einem Klartext, umfasst, die eine Semantik, eine Funktion und/oder den Verifikationsstatus der Teilkonfiguration (T1, T2, T3, T4) wiedergibt.

10. Verfahren nach einem der vorhergehenden Ansprüche 1 bis 9, **dadurch gekennzeichnet, dass** die Verifikation der Teilkonfiguration (T1, T2, T3, T4) einem vorgegebenen Authentifizierungslevel zugewiesen wird.

11. Verfahren nach einem der vorherigen Ansprüche 1 bis 10, **dadurch gekennzeichnet, dass** die letzte Teilkonfiguration (T4) von allen Teilkonfigurationsfolgen (TF1, TF2) gleich ist.

12. Verfahren nach einem der vorherigen Ansprüche 1 bis 10, **dadurch gekennzeichnet, dass** die letzte Teilkonfiguration (T2, T3) von zumindest zwei Teilkonfigurationsfolgen (TF1, TF2) verschieden ist.

## Claims

1. A method for verifying a configuration of a device, in particular a safety controller (11), comprising the steps of:
Subdividing the configuration of the device into at least two sub-configurations (T1, T2, T3, T4) that are to be verified,
Determining parameters of each sub-configuration (T1 - T4), whereby the parameters are used to verify the respective sub-configuration (T1, T2, T3, T4), Calculating a single checksum for each sub-configuration (T1, T2, T3, T4), the checksum is calculated by an external input device and displayed to a user for plausibility checking and which reflects the verification of the sub-configuration (T1, T2, T3, T4), and
Allocating the sub-configurations (T1, T2, T3, T4) to at least one sub-configuration sequence (TF1, TF2), in which a dependence of the verifications of the individual sub-configurations (T1, T2, T4; T1, T3, T4) on one another is predetermined,
wherein the dependency consists in that an individual single checksum of a sub-configuration (T2, T3, T4) following one or more preceding sub-configurations (T1, T2, T3) in the sub-configuration sequence (TF1, TF2) is calculated from its parameters and the parameters of the preceding sub-configurations (T1, T2, T3) so that the parameters of the preceding sub-configurations (T1, T2, T3) are included in the individual checksum of the subsequent sub-configuration (T2, T3, T4), and
Recalculating the individual checksums of the preceding sub-configuration (T1, T2, T3) during the verification of the subsequent sub-configuration (T2, T3, T4), and, if the individual checksums of the preceding sub-configuration (T1, T2, T3) match, the verification of the preceding sub-configuration (T1, T2, T3) is confirmed, and
the configuration of the device is verified if the last sub-configuration (T4) is verified for each sub-configuration sequence (TF1, TF2), and
wherein the sub-configuration sequence (TF1, TF2) is branched into different branches, so that the sub-configurations (T1 - T4) are differently dependent on one another.

2. Method according to claim 1, **characterized in that** an input and/or output unit (11-1, 11-O), a controller (CPU), an interface and other units of the device are divided as sub-configurations (T1 - T4).

3. Method according to claim 1 or 2, **characterized in that** each sub-configuration (T1 - T4) is assigned a verification status, and wherein the verification status of each sub-configuration (T1, T2, T3, T4) depends on the verification status of the preceding sub-configuration (T1, T2, T3).

4. Method according to claim 3, **characterized in that** the verification status indicates whether the sub-configuration (T1 - T4) is verified or not.

5. Method according to claim 3 or 4, **characterized in that** the verification status of the following sub-configuration (T2, T3, T4) is changed from verified to non-verified if the verification status of the preceding sub-configuration (T1, T2, T3) changes from verified to non-verified.

6. Method according to at least one of the preceding claims 3 to 5, **characterized in that** the verification status of the sub-configuration (T1 - T4) changes if the parameters of the sub-configuration (T1 - T4) are changed.

7. Method according to one of the preceding claims 1 to 6, **characterized in that** the parameters are differentiated into first safety-relevant parameters and second non-safety-relevant parameters, and wherein the individual checksum is calculated from the first parameters of the sub-configuration (T1, T2, T3, T4).

8. Method according to Claim 7, **characterized in that** during the verification of the subsequent sub-configuration (T2, T3, T4), the second parameters in addition to the individual checksum of the preceding sub-configuration (T1, T2, T3) are also specified.

9. Method according to claim 7 or 8, **characterized in that** the second parameters comprise a description, preferably in plain text, which represents a semantics, a function and/or the verification status of the sub-configuration (T1, T2, T3, T4).

10. Method according to one of the preceding claims 1 to 9, **characterized in that** the verification of the sub-configuration (T1, T2, T3, T4) is assigned to a predetermined authentication level.

11. Method according to any of the previous claims 1 to 10, **characterized in that** the last sub-configuration (T4) of all sub-configuration sequences (TF1, TF2) is the same.

12. Method according to any of the previous claims 1 to 10, **characterized in that** the last sub-configuration (T2, T3) is different from at least two sub-configuration sequences (TF1, TF2).

## Revendications

1. Procédé de vérification d'une configuration d'un dispositif, en particulier d'une commande de sécurité (11), comprenant les étapes suivantes:
subdiviser la configuration de ce dispositif en au moins deux sub-configurations (T1, T2, T3, T4) qui seront vérifiées,
déterminer des paramètres de chaque sub-configuration (T1 - T4), les paramètres étant utilisés pour vérifier la sub-configuration respective (T1, T2, T3, T4),
calculer pour chaque sub-configuration (T1, T2, T3, T4) une somme de contrôle unique, qui est calculée par un dispositif d'entrée externe et affichée à l'utilisateur pour un contrôle de plausibilité et qui reflète la vérification de la sub-configuration (T1, T2, T3, T4), et
allouer des sub-configurations (T1, T2, T3, T4) à au moins une séquence des sub-configurations (TF1, TF2), dans laquelle une dépendance des vérifications des différentes sub-configurations (T1, T2, T4 ; T1, T3, T4) les unes par rapport aux autres est prédéterminée,
où la dépendance consiste en ce qu'une somme de contrôle individuelle d'une sub-configuration (T2, T3) suit dans la séquence de sub-configuration (TF1, TF2) une ou plusieurs sub-configurations précédentes (T1, T2, T3), T4) est calculée à partir de ses paramètres et des paramètres des sub-configurations précédentes (T1, T2, T3) de sorte que les paramètres des sub-configurations précédentes (T1, T2, T3) sont inclus dans la somme de contrôle individuelle de la sub-configuration suivante (T2, T3, T4), et
lors de la vérification de la sub-configuration suivante (T2, T3, T4), la sommes de contrôle individuelle de la sub-configuration précédente (T1, T2, T3) sont recalculées et, si les sommes de contrôle individuelles de la sub-configuration précédente (T1, T2, T3) correspondent, la vérification de la sub-configuration précédente (T1, T2, T3) est confirmée, et
la configuration du dispositif est vérifiée si la dernière sub-configuration (T4) est vérifiée pour chaque séquence de sub-configuration (TF1, TF2), et
où la séquence de sub-configuration (TF1, TF2) est branchée en différentes branches, de sorte que les sub-configurations (T1 - T4) dépendent les unes des autres de différentes manières.

2. Procédé selon la revendication 1, **caractérisé en ce qu'**une unité d'entrée et/ou de sortie (11-l, 11-O), une commande (CPU), une interface et d'autres unités du dispositif sont divisés en sub-configurations (T1 - T4).

3. Procédé selon la revendication 1 ou 2, **caractérisé en ce qu'**un état de vérification est attribué à chaque sub-configuration (T1 - T4), et dans lequel l'état de vérification de chaque sub-configuration (T1, T2, T3, T4) dépend de l'état de vérification de la sub-configuration précédente (T1, T2, T3).

4. Procédé selon la revendication 3, **caractérisée en ce que** l'état de vérification indique si la sub-configuration (T1 - T4) est vérifiée ou non.

5. Procédé selon la revendication 3 ou 4, **caractérisée en ce que l'état** de vérification de la sub-configuration suivante (T2, T3, T4) passe de vérifié à non vérifié si l'état de vérification de la sub-configuration précédente (T1, T2, T3) passe de vérifié à non vérifié.

6. Procédé selon au moins une des revendications 3 à 5 précédentes, **caractérisée en ce que** l'état de vérification de la sub-configuration (T1 - T4) change si les paramètres de la sub-configuration (T1 - T4) sont modifiés.

7. Procédé selon l'une des revendications 1 à 6 précédentes, **caractérisé en ce que** les paramètres sont différenciés en premiers paramètres importants pour la sécurité et en seconds paramètres non importants pour la sécurité, et dans lequel la somme de contrôle individuelle est calculée à partir des premiers paramètres de la sub-configuration (T1, T2, T3, T4).

8. Procédé selon la revendication 7, **caractérisée en ce que** lors de la vérification de la sub-configuration suivante (T2, T3, T4), les deuxièmes paramètres en plus de la somme de contrôle individuelle de la sub-configuration précédente (T1, T2, T3) sont également indiqués.

9. Procédé selon la revendication 7 ou 8, **caractérisée en ce que** les seconds paramètres comprennent une description, de préférence en texte clair, qui représente une sémantique, une fonction et/ou l'état de vérification de la sub-configuration (T1, T2, T3, T4).

10. Procédé selon l'une des revendications 1 à 9 précédentes, **caractérisé en ce que** la vérification de la sub-configuration (T1, T2, T3, T4) est allouée à un niveau d'authentification prédéterminé.

11. Procédé selon l'une des revendications précédentes 1 à 10, **caractérisée en ce que** la dernière sub-configuration (T4) de toutes les séquences de sub-configuration (TF1, TF2) est la même.

12. Procédé selon l'une des revendications précédentes 1 à 10, **caractérisée en ce que** la dernière sub-configuration (T2, T3) est différente d'au moins deux séquences de sub-configuration (TF1, TF2).
